# EUROPEAN PATENT APPLICATION

(11) **EP 3 343 827 A1**
(43) Date of publication of application: **04.07.2018**
(21) Application number: 16839666.1
(22) Date of filing: 26.08.2016
(51) Int. Cl.: H04L 9/08, H04L 9/30, H04W 12/02

(54) **INFORMATION SECURITY DEVICE AND INFORMATION SECURITY METHOD USING ACCESSIBILITY**

(30) Priority: 26.08.2015 KR 20150120303
(71) Applicant: Transbox Co., Ltd., Seoul 05556 (KR)
(72) Inventor: PARK, In-Kook, Seoul 05501 (KR)
(74) Representative: Epping - Hermann - Fischer
(86) International application number: PCT/KR2016/009545
(87) International publication number: WO 2017/034378

(57) **Abstract**

Disclosed are an information security device and an information security method for providing information security service by encrypting and decrypting information transmitted using accessibility. The information security device using accessibility includes an input character receiving unit configured to receive an input character, which is input to a second application, by an accessibility function; an input character encrypting unit configured to encrypt the input character into an encrypted character; an encrypted character substituting unit configured to substitute the input character with the encrypted character; an output character receiving unit configured to receive an output character, which is output from the second application, by the accessibility function; a decryption determining unit configured to check whether the output character is an encrypted character and determine whether or not to decrypt the output character; an output character decrypting unit configured to decrypt the output character into the original character, if it is determined to decrypt; and an original character output unit configured to output the original character to the output character in an overlay manner. Thus, a user may receive information security service, independent from the terminal and the service application.

## Description

### TECHNICAL FIELD

The present disclosure generally relates to information security technology, and more particularly, to an information security device and an information security method for maintaining security of information by encrypting and decrypting a character string obtained using an accessibility API.

The present application claims priority to Korean Patent Application No. 10-2015-0120303 filed on August 26, 2015 in the Republic of Korea, the disclosures of which are incorporated herein by reference.

### BACKGROUND ART

A smart terminal provides an accessibility function. The accessibility function of the smart terminal supports the convenience of a user interface to the disabled. For example, if a visually impaired person sets the accessibility function on the smart terminal, the smart terminal outputs a text content, a focus/mouse position, a button name or the like of a screen as voice so that the visually impaired person may conveniently make an input according to the voice guidance.

The information security technique includes encryption and decryption techniques. The security of the data is maintained by encryption and decryption. Also, if a user is set to have an authority for encryption and decryption, the security of the user for accessing the data is maintained. For example, a first user who creates and stores information encrypts the data and then stores or transmits the data. Here, the first user may designate a second user to be set to have an authority for decrypting the encrypted data. If so, only the authorized second user is able to decrypt the encrypted data, so the security of the information is maintained.

### RELATED LITERATURES

### Patent Literature

Korean Patent Registration No. 10-1173583 (August 7, 2012)

### DISCLOSURE

### Technical Problem

The present disclosure is designed based on the recognition of the prior art as described above, and the present disclosure is directed to providing an information security device and an information security method, which may access and bring an input character and an output character based on the accessibility of a smart terminal, and encrypt and decrypt the brought character to maintain the security of the information.

### Technical Solution

In one aspect of the present disclosure, an information security device may execute a first application comprising: an input character receiving unit configured to receive an one or more input characters, which are input to a second application, by an accessibility function; an input character encrypting unit configured to encrypt the input characters into one or more encrypted characters; an encrypted character substituting unit configured to replace the input characters with the encrypted characters of the second application; an output character receiving unit configured to receive an one or more output characters, which are output from the second application, by the accessibility function; a decryption determining unit configured to check whether the output characters are encrypted and determine whether or not to decrypt the output characters; an output character decrypting unit configured to decrypt the output characters into one or more original characters, if it is determined to decrypt; and an original character output unit configured to output the original characters to the output characters of the second application in an overlay manner.

In the present disclosure, when the input characters are selected, the input character receiving unit may display a button for an encrypting command on a screen, and when the displayed button is selected, the input character receiving unit may receive the input characters.

Here, the input character encrypting unit may encrypt the input characters into encrypted characters which include unique identification information for distinctively identifying that the input character is encrypted.

In addition, any least one of inputting, outputting, storing and communicating may be performed to the encrypted character according to an inherent function of the second application.

Preferably, when the output characters are selected, the output character receiving unit may receive the output characters, and when the unique identification information is identified from the received output characters, the decryption determining unit may display a button for a decrypting command on a screen, and when the displayed button is selected, the decryption determining unit may determine to decrypt the output characters.

Here, the information security device may perform the encryption and the decryption in a pretty good privacy (PGP) manner based on a single key or a public key.

According to the second embodiment of the present disclosure, the input character encrypting unit may transmit identification information of a first user who has performed the encryption and at least one second user who is allowed to perform decryption to an information security server and receive the unique identification information from the information security server as a response.

Here, when the inherent identification information is identified from the received output characters, the decryption determining unit may transmit the identified unique identification information and the user identification information to the information security server to request an allowance for decryption, and receive from the information security server a checking result whether the user identification information is checked from the identification information of the second user, and when the received checking result is an allowance for decryption, the decryption determining unit may display a button for a decrypting command on a screen, and when the displayed button is selected, the decryption determining unit may determine to decrypt the output characters.

According to the third embodiment of the present disclosure, the input character encrypting unit may divide the encrypted characters into one or more first encrypted characters and a second encrypted characters, transmit the second encrypted characters to the information security server and request the second encrypted characters to be stored therein, and receive the unique identification information from the information security server as a response, and the encrypted character substituting unit may replace the input characters with the first encrypted characters containing the unique identification information.

Here, when the unique identification information is identified from the received output characters, the decryption determining unit may transmit the identified unique identification information and the user identification information to the information security server to request an allowance for decryption, and receive from the information security server a checking result whether the user identification information is checked from the identification information of the user who is allowed for decryption and the stored second encrypted characters, and when the received checking result is an allowance for decryption, the decryption determining unit may display a button for a decrypting command on a screen, and when the displayed button is selected, the decryption determining unit may determine to decrypt the output characters, and the output character decrypting unit may combine the first encrypted characters and the second encrypted characters and decrypt into the original characters.

In addition, the second encrypted characters stored in the information security server may be deleted by the user who has performed encryption to manage security.

In another aspect of the present disclosure, there is also provided an information security device, which may provide information security service to a user terminal, may be configured with a server comprising: an encryption information registering unit configured to register an encryption key of information, user information having a decryption authority, and a partial character string of one or more encrypted characters; an inherent information responding unit configured to generate unique identification information for inherently identifying the registered encryption information as a response; a decryption request receiving unit configured to receive the unique identification information to receive a request for decryption; and a decryption information providing unit configured to check a decryption authority of a user by using the unique identification information, and provide the registered partial character string and decryption information containing the encryption key as a decryption key when the decryption authority is valid.

In another aspect of the present disclosure, an information security method, which may be executed by an information security device, may comprise: (a) an input character receiving step for receiving one or more input characters, which are input to a second application, by an accessibility function; (b) an input character encrypting step for encrypting the input characters into one or more encrypted characters; (c) an encrypted character substituting step for substituting the input characters with the encrypted characters of the second application; (d) an output character receiving step for receiving one or more output characters, which are output from the second application, by the accessibility function; (e) a decryption determining step configured to check whether the output characters are encrypted and determine whether or not to decrypt the output characters; (f) an output character decrypting step for decrypting the output characters into original characters, if it is determined to decrypt; and (g) an original character output step for outputting the original characters to the output characters of the second application in an overlay manner.

### Advantageous Effects

According to an embodiment of the present disclosure, since one user who has generated information encrypts the information and another user who accesses the information decrypts the encrypted character, the end-to-end protection service may be provided for the information between the users, and thus the confidentiality of information is maintained from a user terminal and an information provider.

According to another embodiment of the present disclosure, only a user having decryption authority of information may be allowed to decrypt the information by using a public key-based encryption and decryption method.

According to another embodiment of the present disclosure, the encryption information is divided and a part of information is stored in a server to improve the security of the information, and the information is discarded at the request of a user who performs the encryption, thereby endowing a life cycle for the information.

### DESCRIPTION OF DRAWINGS

The accompanying drawings illustrate exemplary embodiments of the present disclosure and together with the foregoing disclosure, serve to provide further understanding of the technical features of the present disclosure, and thus, the present disclosure is not construed as being limited to the drawing.
FIG. 1 is a schematic view showing information security devices according to the first embodiment of the present disclosure.
FIG. 2 is a schematic view showing information security devices and an information security server according to the second embodiment of the present disclosure.
FIG. 3 is a schematic view showing that an information security server according to the third embodiment of the present disclosure stores a part of encrypted characters.
FIGS. 4a and 4b exemplarily show screens for the information security device according to an embodiment of the present disclosure to send a security message.
FIG. 5 exemplarily shows a screen for the information security device of FIG. 4 to receive a security message.
FIG. 6 is a schematic flowchart for illustrating an information security method according to the first embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

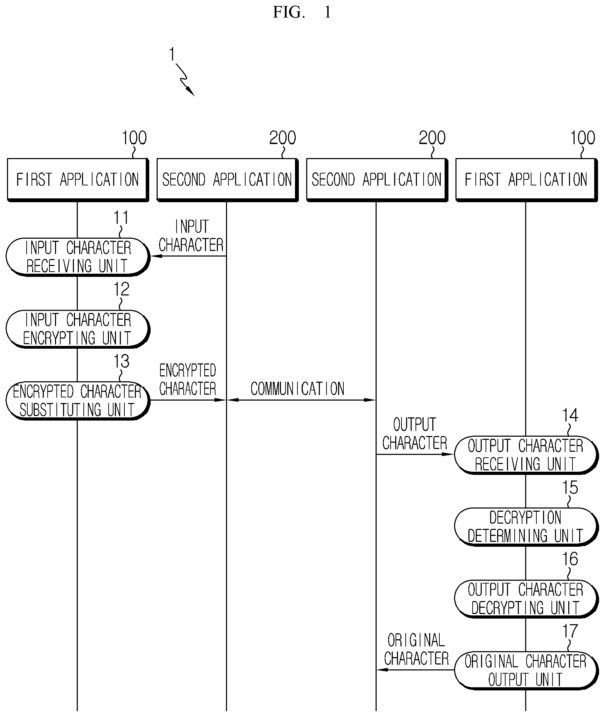

FIG. 1 is a schematic view showing an information security device 1 according to the first embodiment of the present disclosure.

The information disclosure device 1 of the present disclosure may employ any information communication terminal having applications executing function without special limitations. For example, a computer terminal, a smart terminal or the like may be used as the information security device 1.

A first application 100 of the present disclosure is installed and executed in the information security device 1 to provide information security service by encrypting and decrypting information. The information security device 1 executes the first application 100 by memory loading and processor processing. The first application 100 encrypts one or more input characters which are input to a second application 200 executed at the information security device 1, decrypts the encrypted characters output from the second application 200, and outputs the output encrypted characters as an original characters.

The second application 200 of the present disclosure may be any application which is executed in the information security device 1 without any special limitations. For example, assuming that information security device 1 is a smart terminal, a memo application, an address book application and an SNS application executed at the smart terminal corresponds to the second application 200.

For example, the second application 200 is assumed as a memo program having a locally executed function without a communication function. A user input characters "111-222-34567/8901" as 'account/password' by using the second application 200 and requests encryption to the first application 100. The first application 100 encrypts the input characters and substitutes the original input characters "111-222-34567/8901" with an encrypted characters "A0789bcd&*0090!65". Then, the second application 200 stores the encrypted characters as a memo content according to the request of the user. After that, the second application 200 outputs the encrypted characters on a screen according to the request of the user. If the user requests decryption to the first application 100, the first application 100 decrypts the encrypted characters "A0789bcd&*0090!65" output on the screen and displays the original characters "111-222-34567/8901". Thus, the user may store an important content of the memo application as an encrypted characters and decrypt and check their original characters whenever required.

As another example, the second application 200 is assumed as a message program having a communication function. The user inputs characters "111-222-34567/8901" as 'account/password' by using the second application 200 and requests encryption to the first application 100. The first application 100 encrypts the input characters and substitutes the original input characters "111-222-34567/8901" with an encrypted characters "A0789bcd&*0090!65". Then, the second application 200 inputs the encrypted characters as a message content. After that, the second application 200 transmits the encrypted characters to a message receiver according to the request of the user. If the receiver receives the message, a second application 200 of an information security device of the receiving party outputs the received encrypted characters on a screen. If the receiver requests decryption to the first application 100, the first application 100 decrypts the encrypted characters "A0789bcd&*0090!65" output on the screen and displays the original characters "111-222-34567/8901". Thus, the user may transmit an important content of the message application as an encrypted characters by communication and decrypt and check their original characters whenever required.

Here, if the information security is communication security, the data transmitted during the communication process is encrypted and thus protected against a third party. Therefore, after the communication is completed, since the original character is displayed at the communication terminal, the information security is weak. In addition, a service provider of the program of the communication terminal is accessible to the data of the user, so the security is weak. However, the present disclosure provides user-to-user encryption and decryption service, and thus only the user may serve as the subject of information security. Thus, the present disclosure provides powerful information security, independent from the communication security as well as the service provider.

For reference, for convenience of explanation, FIG. 1 depicts that the second application 200 is assumed as being a message program and transmits encrypted characters with another party by communication. Hereinafter, it is assumed that the information security service is accompanied by a wired or wireless communication between a sender and a receiver.

The information security device 1 according to the first embodiment of the present disclosure includes an executes a first application 100, and the first application 100 includes an input character receiving unit 11 for receiving input characters input to the second application 200, an input character encrypting unit 12 for encrypting the received input characters into one or more encrypted character, an encrypted character substituting unit 13 for substituting the input characters with the encrypted characters, an output character receiving unit 14 for receiving one or more output characters output from the second application 200, a decryption determining unit 15 for checking whether the received output characters are encrypted and determining whether or not to decrypt the output characters, an output character decrypting unit 16 for decrypting the output characters, which is determined to be decrypted, into one or more original characters, and an original character output unit 17 for outputting the decrypted original characters to the output characters in an overlay manner.

The input character receiving unit 11 receives the input characters input to the second application 200 by means of an accessibility function. The input characters may be input to the second application 200 through an input window or an edit box, and at this time the input character receiving unit 11 brings the input characters of the second application 200 by using the accessibility function of the operating system (OS).

Here, if the input characters are selected by the user, the input character receiving unit 11 displays a button for an encrypting command on the screen, and if the displayed button is selected, the input character receiving unit 11 receives the selected input characters. In other words, the user should select an area of the input characters in order to bring the input characters. Accordingly, while inputting one or more characters into the second application 200, the user selects the input characters if it is determined that the information security is necessary. If so, the first application 100 displays the button of the encrypting command.

If the user requests the encryption by clicking the encryption button, the input character encrypting unit 12 encrypts the input characters received by the accessibility function. The encrypted characters include unique identification information for distinctively identifying that the input characters are encrypted. In other words, if the unique identification information is identified from any character string, it is determined that the character string is an encrypted character string.

Here, the input character encrypting unit 12 generates an encrypted character in a pretty good privacy (PGP) encryption manner based on a single key or a public key. Thus, a corresponding decryption manner is applied to the encrypted character.

The encrypted character substituting unit 13 replaces the input characters corresponding to the original characters with the encrypted characters. If so, the user who has entered the input characters should be also capable of checking the original characters only by decrypting the encrypted characters. After that, the second application 200 may perform at least one of inputting, outputting, storing and communicating processes according to an inherent function of the second application 200.

The output character receiving unit 14 receives one or more characters, output on the screen by the second application 200, using an accessibility function. If the characters output on the screen is selected by the user, the output character receiving unit 14 brings the output characters by using the accessibility function of the OS.

Here, since the output characters displayed on the screen are encrypted characters and look like a random number sequence character, only the user who already knows that the output characters are encrypted characters is able to select the encrypted characters, thereby maintaining the security of the information.

If the unique identification information is identified from the output characters received by the accessibility function, the decryption determining unit 15 displays a button for a decrypting command on the screen. If the unique identification information is not identified, the button is not displayed because the output characters are not encrypted characters of the present disclosure. If the user selects the button, the decryption determining unit 15 determines to decrypt the output characters on the screen.

If it is determined to perform decryption, the output character decrypting unit 16 decrypts the output characters by a decryption key to generate the original characters. The output character decrypting unit 16 decrypts the output characters by applying a decryption method corresponding to the encryption method of the input character encrypting unit 12.

For example, a message data contains the decryption key, and the output character decrypting unit 16 decrypts the output characters by using the received decryption key. If the received decryption key is encrypted using the public key of the receiver, it is required to decrypt the decryption key of the message by using the private key of the receiver.

The original character output unit 17 displays the decrypted original character on the encrypted character output by the second application 200 in an overlay manner. The user checks the original character through the overlay window whenever necessary. The original character output unit 17 closes the overlay window according to a request of the user.

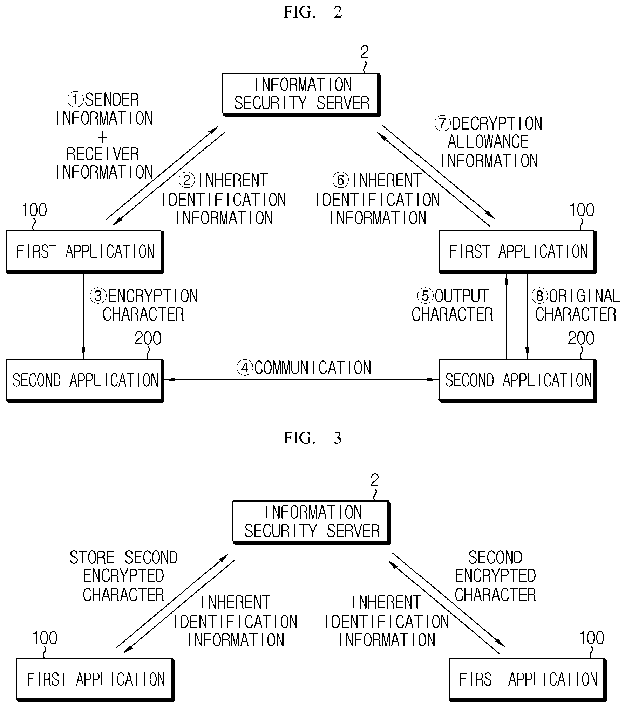

FIG. 2 is a schematic view showing an information security device 1 and an information security server 2 according to the second embodiment of the present disclosure.

According to the second embodiment of the present disclosure, the information security server 2 is provided, different from the first embodiment, and the information security server 2 manages a decryption authority of the user for the encrypted characters. In other words, the configuration of the first embodiment applies equally to the second embodiment, except for the above differences. Hereinafter, the same structure as the first embodiment will not be described in detail and only the different features are explained in detail.

The input character encrypting unit 12 of the first application 100 of a sender transmits sender information and receiver information to an encryption information registering unit of the information security server 2 during an encryption process to request to generate unique identification information (①). The input character encrypting unit 12 receives the unique identification information corresponding to the sender and receiver information from the unique information responding unit of the information security server 2 ((2)). Then, the input character encoding unit 12 generates an encrypted characters containing the received inherent identification information (③). The encrypted characters are transmitted to the second application 200 of a receiver through the second application 200 of the sender by communication (④).

In other words, the input character encrypting unit 12 transmits the identification information of a first user (the sender) who has performed encryption and at least one second user (the receiver) who is allowed to perform decryption to the information security server 2, and receives the unique identification information from the information security server 2 as a response. The identification information of the second user may be specified for an individual user or whole users.

Meanwhile, the information security server 2 encrypts the encryption key of the message by using the public key of the receiver according to the receiver setting of the sender and stores it as a decryption key of a message of each receiver.

The second application 200 of the receiver outputs the encrypted characters on the screen. If the user selects the characters, the output character receiving unit 14 of the first application 100 receives the output characters by means of the accessibility function ((5)). If the unique identification information is identified from the received output character, the decryption determining unit 15 transmits the identified unique identification information and the user identification information of the receiver to the information security server 2 to request an allowance for decryption (⑥). A decryption information providing unit of the information security server 2 checks whether the received user identification information is identical to the user identification information having a decryption authority set by the sender. The decryption determining unit 15 receives the checking result of the user identification information from the decryption information providing unit of the information security server 2. Then, if the received checking result is an allowance for decryption, the decryption determining unit 15 displays a button for a decrypting command on the screen, and if the displayed button is selected, the decryption determining unit 15 determines to decrypt the output character (⑦).

Here, if the user selects one or more characters without a decryption authority, description is not allowed, and thus the button is not displayed on the screen. Thus, the user who is not allowed for decryption is unable to check whether the corresponding output characters are encrypted characters or an original characters. In other words, decryption is allowed only for an user having authority, and thus security is maintained.

If decryption is allowed, the decryption determining unit 15 receives decryption allowance information containing the decryption key of the stored message from the decryption information providing unit of the information security server 2. The output character decrypting unit 16 decrypts the encrypted character by using the decryption key of the received message, and displays the decrypted original character on the output character of the second application 200 to overlay thereon (⑧). Here, if the public key is used, the first application 100 decrypts the decryption key of the received message by using the private key of the receiver, and decrypts the encrypted character by using the decrypted decryption key.

Thus, in the second embodiment, the information security server 2 designates a user with a decryption authority, checks the decryption authority for the decryption request of the user, and provides a decryption key only for the user with a valid decryption authority, thereby maintaining security of the user.

FIG. 3 is a schematic view showing that an information security server 2 according to the third embodiment of the present disclosure stores a part of encrypted characters.

In the third embodiment of the present disclosure, the information security server 2 stores a divided part of the encrypted character, different from the first embodiment and the second embodiment. In other words, the configuration of the first embodiment and the second embodiment applies equally to the third embodiment, except for the above differences. Hereinafter, only the different features of the third embodiment will be explained in detail.

The input character encrypting unit 12 of the first application 100 of the sender divides the encrypted character into a plurality of characters during an encryption process, transmits a part of the divided characters to the information security server 2 and requests the part of the divided characters to be stored therein, and requests to generate unique identification information. The sender may also set a user having decryption authority for the encrypted character. It is assumed that the encrypted characters are divided into first encrypted characters and second encrypted characters, and the second encrypted characters are stored in the information security server 2.

The unique information responding unit of the information security server 2 generates the unique identification information, stores the generated unique identification information in association with the identification information of the sender and the receiver, and transmits the unique identification information to the input character encrypting unit 12 as a response.

The encrypted character substituting unit 13 substitutes the input character of the second application 200 with the first encrypted characters containing the unique identification information transmitted as a response. The first encrypted characters are transmitted to the second application 200 of the receiver through the second application 200 of the sender by communication.

The second application 200 of the receiver outputs the encrypted characters received from the sender on the screen. The decryption determining unit 15 transmits the unique identification information identified from the output characters on the screen to the information security server 2 to request an allowance for decryption.

The decryption information providing unit of the information security server 2 checks whether the received user identification information is identical to the user identification information having a decryption authority set by the sender. If the decryption authority is valid, the information security server 2 transmits the decryption key of the stored message and the second encrypted character as a response.

The decryption determining unit 15 receives the decryption key and the second encrypted character from the information security server 2, displays a button for a decrypting command on the screen, and decrypts the output character if the displayed button is selected.

The output character decrypting unit 16 combines the first encrypted character and the second encrypted character, decrypts the combined encrypted character by using the received decryption key, and displays the decrypted original character to overlay on the output character of the second application 200.

Thus, in the third embodiment, since the information security server 2 stores a part of the encrypted characters and provides the stored encrypted characters only for a user having a valid decryption authority, the security of the data is maintained

Here, if the encryption data is divided and a part of data is stored in the server separately, the following advantages are provided. First, input characters obtained in an input window by means of the accessibility function has an increased data length due to the encrypted characters. The encrypted characters substitutes with the input characters of the input window and thus may have a limit in length. Thus, if the encrypted characters exceed the length limit, the encrypted characters may be corrupted and may not be recovered again. For this reason, if the first encrypted characters have a length smaller than the length of the input characters and the remainder is stored as the second encrypted characters, it is possible to avoid data corruption while satisfying the length limit. Next, if the second encrypted characters are stored in the information security server 2, the encryption user has a right for discarding the second encrypted characters by endowing a life cycle to characters that need security. For example, the user performing encryption may set so that the second encrypted characters are automatically deleted from the information security server 2 after the receiver receives the second encrypted characters. The discarding method of the encryption user may be set in various ways, based on receiving times and receiving periods. However, if the encryption user discards the second encrypted characters before the receiver receives the second encrypted characters, the receiver is not able to decrypt the encrypted character.

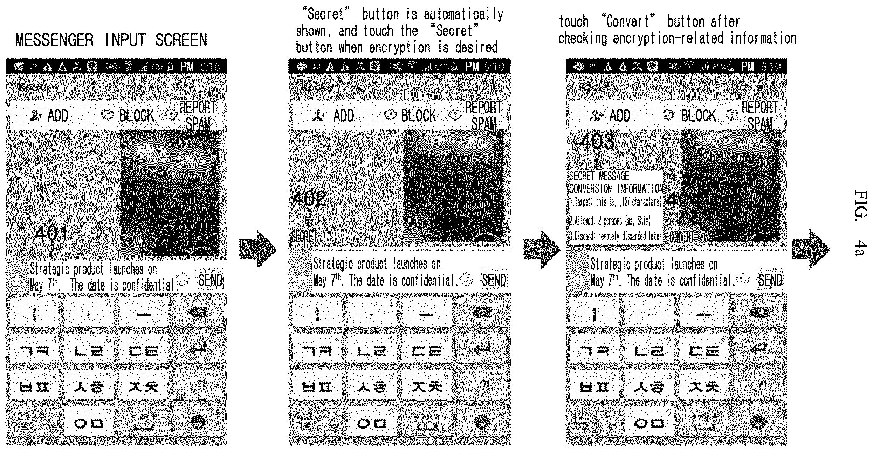

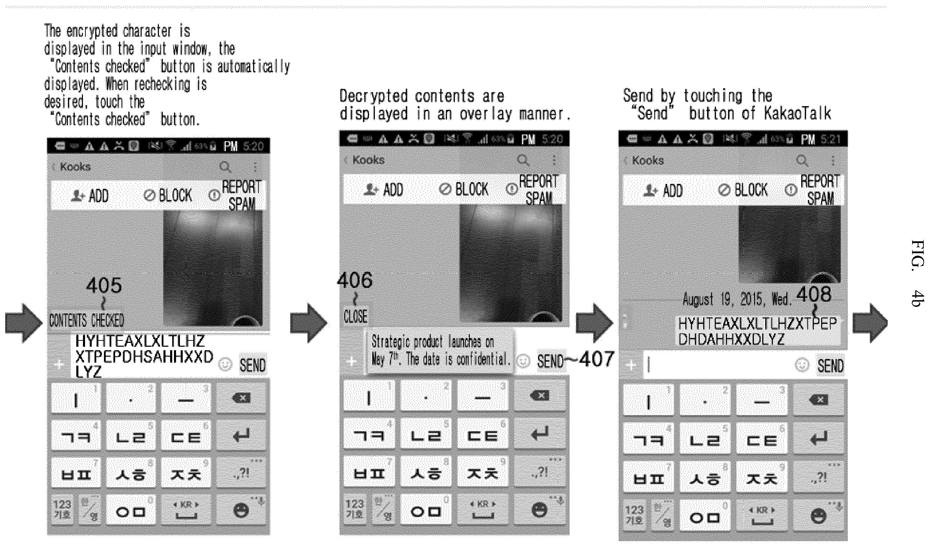

FIGS. 4a and 4b exemplarily show screens for the information security device 1 according to an embodiment of the present disclosure to send a security message.

For convenience of explanation, it is assumed that the information security device 1 is a smart terminal and the second application 200 is a SNS message program of the smart terminal.

Referring to FIG. 4a, after a user inputs a character string in an input window 401 of the message program, if encryption is required, the user touches an area of the character string to select the character string. The first application 100 displays an encryption button 402 on the screen. If the user selects the encryption button 402, an option window 403 is generated to set an encryption option. In the option window 403, the first application 100 may set an encryption option such as an encryption target corresponding to the beginning and end of the character area, a receiver having a decryption authority or the like. The option setting of the option window 403 may be omitted by the default setting of the user.

Referring to FIG. 4b, by a conversion button 404, the input characters of the input window 402 are substituted with an encrypted characters, and a decryption button 405 is displayed to decrypt the encrypted characters into the original characters. If the decryption button 405 is selected, the first application 100 generates an overlay window to display the decrypted original characters, and also displays a closing button 406. In other words, after encrypting the character string, the user who has encrypted the character string is also able to check the original characters by selecting the decryption button 405. After that, if the user presses a sending button in the message program, the encrypted characters are transmitted to the receiver.

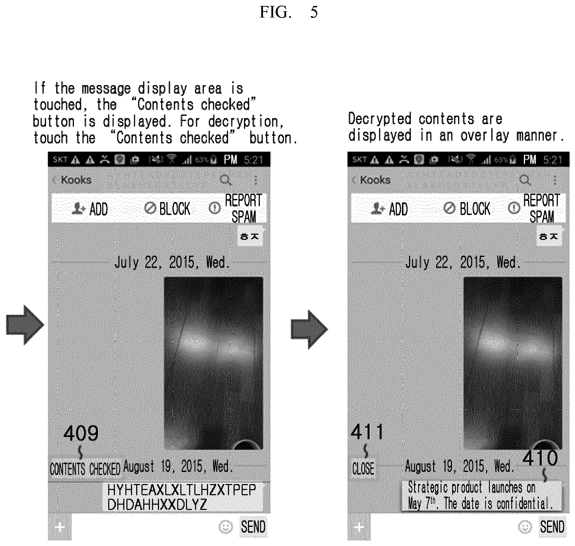

FIG. 5 exemplarily shows a screen for the information security device 1 of FIG. 4 to receive a security message.

The second application 200 of the information security device 1 receives the encrypted characters and displays the encrypted characters on the screen. The receiver does not exactly know whether the character string displayed on the screen is an encrypted characters or just a broken characters. If the receiver is informed by the sender that the displayed character string is an encrypted characters, the receiver is able to know that the displayed character string is an encrypted characters.

If the receiver touches the encrypted characters, the first application 100 receives the character string by using the accessibility function, extracts the unique identification information from the received character string, determines whether the extracted unique identification information is valid, and outputs a decryption button 409 on the screen if the unique identification information is valid.

Thus, the decryption button 409 is displayed only when the user recognizing that the received character string is an encrypted characters touches the area of the character string on the screen, the security is improved. Here, in order to further improve the security, it is possible that the first application 100 transmits an identification number (for example, a telephone number) of the receiver and the unique identification information to the information security server 2, receives a determination result about the decryption authority from the information security server 2, and displays the decryption button 409 only when the user has valid decryption authority according to the received determination result. In other words, it is desirable that the decryption button 409 is displayed on the screen only for a user having a valid decrypting right.

If the decryption button 409 is selected by the user, the first application 100 decrypts the character string on the screen by using the decryption key, and generates an overlay window 410 on the character string of the screen to temporarily display the decrypted original character. If the closing button 411 is selected by the user, the overlay window 410 is closed and the encrypted character of the sender is displayed.

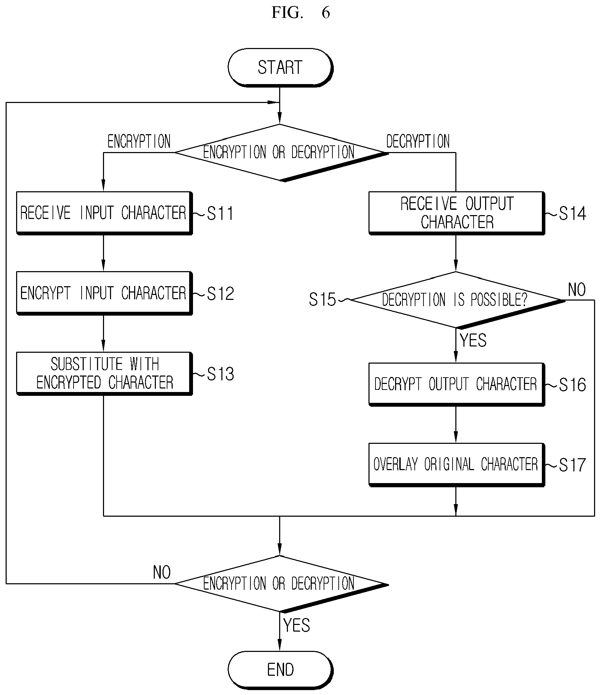

FIG. 6 is a schematic flowchart for illustrating an information security method according to the first embodiment of the present disclosure.

The user downloads the first application 100 to the information security device 1 and installs the first application 1. After that, if the user selects the input character string while the character string is being input to any second application 200, the first application 100 receives the input character string by using the accessibility function (S11). Then, the first application 100 may display the encryption button 402 on the screen of the second application 200.

If encryption is requested by the user, the first application 100 encrypts the received character string by using the encryption key of the user to generate an encrypted character string (S12). In the first embodiment, the encrypted character string contains inherent identification information and a decryption key corresponding to the encryption key. The first application 100 substitutes the character string input to the second application 200 with the encrypted character string (S13). After the encrypted character string is generated, the original character string disappears and the original character string is restored just by decrypting the encrypted character string. The user stores the encrypted character string or transmits the encrypted character string through a network according to the inherent function of the second application.

If the user defines the inherent encryption key, the user serving as a sender notifies the encryption key only the receiver, and if the receiver inputs the encryption key as a decryption key, the security of the information between the sender and the receiver is maintained.

In a state where the encrypted characters are output to the screen of the second application 200, if the user selects the encrypted output character string on the screen, the first application 100 receives the output character string based on the accessibility function (S14).

If the output character string is received, the first application 100 extracts the unique identification information and the decryption key from the output character string, and determines that decryption is possible if the unique identification information is valid (S15).

If decryption is possible, the first application 100 displays the decryption button 405, 409 on the screen, and if the decryption button 405, 409 is selected by the user, the first application 100 decrypts the output character string by using the decryption key (S16). The first application 100 displays the decrypted original character on the output character string in an overlay manner (S17).

The second embodiment may be applied to the above first embodiment as follows.

In the input character encrypting step (S12), the first application 100 transmits the receiver information containing the sender information and the decryption authority to the information security server 2 to request the generation of the unique identification information. The first application 100 receives the unique identification information from the information security server 2 and generates encrypted characters containing the received unique identification information. Here, the information security server 2 encrypts the encryption key by using a public key of an individual receiver according to the receiver designation of the sender and stores the encryption key as a decryption key for each receiver.

In the step of determining whether decryption is possible (S15), if the inherent identification information is identified from the received output characters, the first application 100 transmits the identified unique identification information and the user identification information of the receiver to the information security server 2 and requests an allowance for decryption. The information security server 2 checks whether the received user identification information is identical to the user identification information of having decryption authority set by the sender. If it is checked that they are identical, the first application 100 receives a result whether decryption is possible, from the information security server 2. If the received result is an allowance for decryption, the button for a decrypting command is displayed on the screen. In addition, if decryption is allowed, the first application 100 receives decryption allowance information containing the stored decryption key from the information security server 2.

The third embodiment may be applied to the first or second embodiments as follows.

In the input character encrypting step (S12), the first application 100 divides the encrypted characters into a plurality of characters during the encryption process, transmits a part of the divided characters to the information security server 2 to request the part of the divided characters to be stored, and requests the information security server 2 to generate the unique identification information. For example, the encrypted characters may be divided into first encrypted characters and second encrypted characters, and the second encrypted characters may be stored in the information security server 2. Then, the information security server 2 generates the unique identification information, and the first application 100 substitutes the input characters of the second application 200 with the first encrypted characters containing the unique identification information received from the information security server 2 (S13).

Here, the second encrypted characters stored in the information security server 2 may be discarded by the user who has performed the encryption. If the information is discarded, the encrypted data character is not able to be decrypted. The user may discard the information after performing encryption and before decryption is performed by someone else. In another case, the user may designate a life cycle of the information by setting decryption times, decryption period or the like of the information.

In the step of determining whether decryption is possible (S15), if the unique identification information is identified from the received output characters, the first application 100 transmits the identified unique identification information and the user identification information of the receiver to the information security server 2 and requests an allowance for decryption. The information security server 2 checks whether the received user identification information is identical to the user identification information of decryption authority set by the sender, and if the decryption authority is valid, an allowance result containing the stored second encrypted characters and the decryption key is transmitted to the first application 100 as a response. The first application 100 receives the allowance result whether decryption is possible, from the information security server 2.

If the received result is an allowance for decryption, the button 405, 409 for a decrypting command is displayed on the screen. If the decryption button 405, 409 is selected, the first application 100 combines the first encrypted characters and the second encrypted characters, and decrypts the combined encrypted characters by using the decryption key (S16).

In the above embodiments, the term "unit" is not used to distinguish hardware components of the information security device 1. Thus, a plurality of components may be integrated into one component, and one component may be divided into a plurality of components. In addition, the component may mean a hardware component but may also mean a software component. Thus, it should be understood that the present disclosure is not specially limited by the term "unit".

Though the present disclosure has been described based on the embodiments and the drawings, the present disclosure is not limited thereto, but various changes and modifications can be made by those skilled in the art within the equivalent scope of the present disclosure and the appended claims.

## Claims

1. An information security device, which executes a first application comprising:
an input character receiving unit configured to receive an input character, which is input to a second application, by an accessibility function;
an input character encrypting unit configured to encrypt the input character into an encrypted character;
an encrypted character substituting unit configured to substitute the input character of the second application with the encrypted character;
an output character receiving unit configured to receive an output character, which is output from the second application, by the accessibility function;
a decryption determining unit configured to check whether the output character is an encrypted character and determine whether or not to decrypt the output character;
an output character decrypting unit configured to decrypt the output character into the original character, if it is determined to decrypt; and
an original character output unit configured to output the original character on the output character of the second application in an overlay manner.

2. The information security device according to claim 1,
wherein when the input character is selected, the input character receiving unit displays a button for an encrypting command on a screen, and when the displayed button is selected, the input character receiving unit receives the input character.

3. The information security device according to claim 1,
wherein the input character encrypting unit encrypts the input character into an encrypted character which includes inherent identification information for inherently identifying that the input character is encrypted.

4. The information security device according to claim 1,
wherein any least one of inputting, outputting, storing and communicating is performed to the encrypted character according to an inherent function of the second application.

5. The information security device according to claim 3,
wherein when the output character is selected, the output character receiving unit receives the output character, and
wherein when the inherent identification information is identified from the received output character, the decryption determining unit displays a button for a decrypting command on a screen, and when the displayed button is selected, the decryption determining unit determines to decrypt the output character.

6. The information security device according to claim 1,
wherein the encryption and the decryption are performed in a pretty good privacy (PGP) manner based on a single key or a public key.

7. The information security device according to claim 3,
wherein the input character encrypting unit transmits identification information of a first user who has performed the encryption and at least one second user who is allowed to perform decryption to an information security server and receives the inherent identification information from the information security server as a response.

8. The information security device according to claim 7,
wherein when the inherent identification information is identified from the received output character, the decryption determining unit transmits the identified inherent identification information and the user identification information to the information security server to request an allowance for decryption, and receives from the information security server a checking result whether the user identification information is checked from the identification information of the second user, and when the received checking result is an allowance for decryption, the decryption determining unit displays a button for a decrypting command on a screen, and when the displayed button is selected, the decryption determining unit determines to decrypt the output character.

9. The information security device according to claim 3,
wherein the input character encrypting unit divides the encrypted character into a first encrypted character and a second encrypted character, transmits the second encrypted character to the information security server and requests the second encrypted character to be stored therein, and receives the inherent identification information from the information security server as a response, and
wherein the encrypted character substituting unit substitutes the input character with the first encrypted character containing the inherent identification information.

10. The information security device according to claim 9,
wherein when the inherent identification information is identified from the received output character, the decryption determining unit transmits the identified inherent identification information and the user identification information to the information security server to request an allowance for decryption, and receives from the information security server a checking result whether the user identification information is checked from the identification information of the user who is allowed for decryption and the stored second encrypted character, and when the received checking result is an allowance for decryption, the decryption determining unit displays a button for a decrypting command on a screen, and when the displayed button is selected, the decryption determining unit determines to decrypt the output character, and
wherein the output character decrypting unit combines the first encrypted character and the second encrypted character and decrypts into the original character.

11. The information security device according to claim 9,
wherein the second encrypted character stored in the information security server is deleted by the user who has performed encryption to manage security.

12. An information security device, which provides information security service to a user terminal, the information security device is configured with a server comprising:
an encryption information registering unit configured to register an encryption key of information, user information having a decryption authority, and a partial character string of an encrypted character;
an inherent information responding unit configured to generate inherent identification information for inherently identifying the registered encryption information as a response;
a decryption request receiving unit configured to receive the inherent identification information to receive a request for decryption; and
a decryption information providing unit configured to check a decryption authority of a user by using the inherent identification information, and provide the registered partial character string and decryption information containing the encryption key as a decryption key when the decryption authority is valid.

13. An information security method, which is executed by an information security device, the information security method comprising:
(a) an input character receiving step for receiving an input character, which is input to a second application, by an accessibility function;
(b) an input character encrypting step for encrypting the input character into an encrypted character;
(c) an encrypted character substituting step for substituting the input character of the second application with the encrypted character;
(d) an output character receiving step for receiving an output character, which is output from the second application, by the accessibility function;
(e) a decryption determining step configured to check whether the output character is an encrypted character and determine whether or not to decrypt the output character;
(f) an output character decrypting step for decrypting the output character into the original character, if it is determined to decrypt; and
(g) an original character output step for outputting the original character on the output character of the second application in an overlay manner.

14. The information security method according to claim 13,
wherein in the step (a), when the input character is selected, a button for an encrypting command is displayed on a screen, and when the displayed button is selected, the input character is received.

15. The information security method according to claim 13,
wherein in the step (b), the input character is encrypted into an encrypted character which includes inherent identification information for inherently identifying that the input character is encrypted.

16. The information security method according to claim 13,
wherein after the step (c), wherein any least one of inputting, outputting, storing and communicating is performed to the encrypted character according to an inherent function of the second application.

17. The information security method according to claim 15,
wherein in the step (d), when the output character is selected, the output character is received, and
wherein in the step (e), when the inherent identification information is identified from the received output character, a button for a decrypting command is displayed on a screen, and when the displayed button is selected, it is determined to decrypt the output character.

18. The information security method according to claim 13,
wherein in a PGP manner based on a single key or a public key, the encryption is performed in the step (b) and the decryption is performed in the step (f).

19. The information security method according to claim 15,
wherein in the step (b), identification information of a first user who has performed the encryption and at least one second user who is allowed to perform decryption is transmitted to an information security server, and the inherent identification information is received from the information security server as a response.

20. The information security method according to claim 19,
wherein in the step (e), when the inherent identification information is identified from the received output character, the identified inherent identification information and the user identification information are transmitted to the information security server to request an allowance for decryption, and a checking result whether the user identification information is checked from the identification information of the second user is received , from the information security server and when the received checking result is an allowance for decryption, a button for a decrypting command is displayed on a screen, and when the displayed button is selected, it is determined to decrypt the output character.

21. The information security method according to claim 15,
wherein in the step (b), the encrypted character is divided into a first encrypted character and a second encrypted character, the second encrypted character is transmitted to the information security server and requested to be stored therein, and the inherent identification information is received from the information security server as a response, and
wherein in the step (c), the input character is substituted with the first encrypted character containing the inherent identification information.

22. The information security method according to claim 21,
wherein in the step (e), when the inherent identification information is identified from the received output character, the identified inherent identification information and the user identification information are transmitted to the information security server to request an allowance for decryption, and a checking result whether the user identification information is checked from the identification information of the user who is allowed for decryption and the stored second encrypted character are received from the information security server, and when the received checking result is an allowance for decryption, a button for a decrypting command is displayed on a screen, and when the displayed button is selected, it is determined to decrypt the output character, and
wherein in the step (f), the first encrypted character and the second encrypted character are combined and decrypted into the original character.

23. The information security method according to claim 21,
wherein after the step (b), the second encrypted character stored in the information security server is deleted by the user who has performed encryption to manage security.
